# EUROPÄISCHE PATENTSCHRIFT

(11) **EP 4 011 519 B1**
(45) Veröffentlichungstag und Bekanntmachung des Hinweises auf die Patenterteilung: **30.10.2024**
(21) Anmeldenummer: 21212270.9
(22) Anmeldetag: 03.12.2021
(51) Int. Cl.: B21D 26/14

(54) **UMFORMWERKZEUG ZUR TIEFZIEHUMFORMUNG EINER POUCHFOLIE IN EINE BEUTELHÄLFTE EINES POUCHBEUTELS**
FORMING TOOL FOR THERMOFORMING A POUCH FILM INTO HALF OF A POUCH
OUTIL DE FORMAGE DESTINÉ AU FORMAGE D'UNE FEUILLE À POCHE EN UN DEMI-SAC D'UN SAC-POCHE

(30) Priorität: 09.12.2020 DE 102020215585
(43) Veröffentlichungstag der Anmeldung: 15.06.2022
(73) Patentinhaber: VOLKSWAGEN AG, 38440 Wolfsburg (DE)
(72) Erfinder: Grau, Frederik, 38124 Braunschweig (DE); Jamadar, Kartik, 38442 Wolfsburg (DE); Theuerkauf, Christian, 38114 Braunschweig (DE)
(74) Vertreter: FDST Patentanwälte

(56) Entgegenhaltungen:
- CN-A- 107 138 591
- US-A- 6 050 121

## Beschreibung

Die Erfindung betrifft ein Umformwerkzeug zur Tiefziehumformung einer Pouchfolie in eine Beutelhälfte eines Pouchbeutels, aufweisend eine Matrize als Negativform der Beutelhälfte, und einen Umformstempel zum Umformen der Pouchfolie in die Matrize. Die Erfindung betrifft weiterhin ein Verfahren zur Herstellung eines Pouchbeutels und eine Vorrichtung zur Durchführung dieses Verfahrens.

Elektrisch beziehungsweise elektromotorisch angetriebene oder antreibbare Kraftfahrzeuge, wie beispielsweise Elektro- oder Hybridfahrzeuge, umfassen in der Regel einen Elektromotor, mit dem eine oder beide Fahrzeugachsen antreibbar sind. Zur Versorgung mit elektrischer Energie ist der Elektromotor üblicherweise an eine fahrzeuginterne (Hochvolt-)Batterie als elektrischen Energiespeicher angeschlossen.

Unter einer insbesondere elektrochemischen Batterie ist hier und im Folgenden insbesondere eine sogenannte sekundäre Batterie (Sekundärbatterie) des Kraftfahrzeugs zu verstehen. Bei einer solchen (sekundären) Fahrzeugbatterie ist eine verbrauchte chemische Energie mittels eines elektrischen (Auf-)Ladevorgangs wiederherstellbar. Derartige Fahrzeugbatterien sind beispielsweise als elektrochemische Akkumulatoren, insbesondere als Lithium-Ionen-Akkumulatoren, ausgeführt. Zur Erzeugung oder Bereitstellung einer ausreichend hohen Betriebsspannung weisen solche Fahrzeugbatterien typischerweise mindestens ein Batteriezellmodul auf, bei welchem mehrere einzelne Batteriezellen modular verschaltet sind.

Die Batteriezellen sind beispielsweise als elektrochemische (Dünn-)Schichtzellen ausgeführt. Die Dünnschichtzellen weisen einen geschichteten Aufbau mit einer Kathodenschicht (Kathode) und mit einer Anodenschicht (Anode) sowie mit einer dazwischen eingebrachten Separatorschicht (Separator) auf. Diese Bestandteile werden beispielsweise von einem flüssigen Elektrolyten (Flüssigelektrolyt) durchdrungen, welcher eine ionenleitfähige Verbindung der Bestandteile beziehungsweise einen Ladungsausgleich erzeugt. In der Regel sind hierbei mehrere Schichtzellen als ein Zellenstapel übereinander gestapelt angeordnet.

Um den Zellenstapel gegen ein Eindringen von Feuchtigkeit und/oder Schmutz schützen, sowie andererseits ein Austreten von Chemikalien beziehungsweise des Flüssigelektrolyten im Falle einer Beschädigung der Batteriezelle zu verhindern, ist in der Regel ein Zellengehäuse als Einhausung oder Ummantelung vorgesehen. Das Zellengehäuse ist beispielsweise als eine Aluminium-Verbund-folie oder als eine Aluminium-Laminatfolie ausgeführt, wobei derartige flexible oder folienartige Zellengehäuse auch als Pouchbeutel oder Pouchfolien-Mantel und Batteriezellen mit einem solchen Zellengehäuse auch als Pouchzellen oder Softpack-Zellen bezeichnet sind.

Derartige Pouchbeutel sind typischerweise aus zwei umlaufend gefügten Beutelhälften hergestellt. Die Beutelhälften sind hierbei in der Regel als tiefgezogene Pouchfolien ausgeführt, welche beispielsweise mittels eines Heißsiegelverfahrens zu einem dichten Pouchbeutel stoffschlüssig gefügt werden.

Unter einem "Tiefziehprozess" oder "tiefziehen" ist hier und im Folgenden insbesondere ein Zugdruckumformen der Pouchfolie zu verstehen. Das Tiefziehen wird mit einem Formwerkzeug ( Stempel), mit einer Wirkenergie (Magnetumformung) durchgeführt. Die Herstellung der Beutelhälften erfolgt durch ein Tiefziehen mit Formwerkzeugen, bei welchem die Pouchfolie mit einem Präge- oder Umformstempel in eine Matrize eingepresst wird.

Zur Herstellung von möglichst hochkapazitiven Batterie- oder Pouchzellen ist eine möglichst hohe Anzahl an Elektroden oder Schichtzellen im Zellenstapel gewünscht. Somit besteht die Notwendigkeit, die Pouchfolie beziehungsweise Beutelhälften möglichst tief umzuformen, sowie die Radien der Kavität oder Matrize möglichst klein zu halten, um so wenig wie möglich Kapazität in der Zelle zu verlieren.

Beim Tiefziehen kommt es zu einer Versetzungsbewegung der Pouchfolie, was zu Festigkeitsveränderungen führen kann. Insbesondere weisen Pouchfolien aus Aluminium-Laminat hierbei eine vergleichsweise schlechte Tiefziehfähigkeit auf. Mit zunehmender Formungstiefe kommt es hierbei zu einer Ausdünnung der Pochfolie, also einer Reduzierung der Materialdicke, in den beanspruchten Bereichen, welche somit anfälliger für Risse sind. Des Weiteren kommt es zu einer Faltenbildung in den Flanschbereichen der Beutelhälften (Eckbereiche). Derartige Risse und Falten reduzieren die Betriebssicherheit der Batteriezelle.

Zur Vermeidung der Rissbildung weisen der Prägestempel und die Matrize daher herkömmlicherweise abgerundete Eckbereiche mit großen Radien auf, um die notwendige Tiefziehtiefe zu realisieren. Dies bedeutet, dass die Matrizen gewöhnlicherweise lediglich Eckwinkel größer 90° aufweisen. Dies führt nachteiligerweise zu einer Reduzierung des in dem Pouchbeutel zur Verfügung stehenden Bauraums, wodurch es zu Kapazitätseinbußen kommt und/oder dickere beziehungsweise größere Pouchzellen verwendet werden müssen.

Zur Vermeidung oder Reduzierung der Rissbildung ist es beispielsweise möglich die Tiefziehtiefen zu reduzieren, was jedoch im Hinblick auf möglichst hochkapazitive Pouchzellen nicht gewünscht ist. Alternativ ist es beispielsweise möglich, eine zielgerichtete Tuschierung der Blech- oder Folienhalter durchzuführen, welche jedoch mit einem hohen Zeitaufwand verbunden ist. Ebenso denkbar ist beispielsweise eine Erhöhung der Temperatur der Pouchfolien beim Umformen, wobei hierbei jedoch die Prozesskosten erhöht und die Laminatqualität reduziert werden. Weiterhin ist eine Erhöhung des Aluminiumanteils in der Pouchfolie möglich, wobei jedoch die Materialkosten sowie das Baugewicht des Pouchbeutels nachteilig erhöht werden.

Aus der DE 10 2013 019 634 A1 ist ein Verfahren zur Herstellung eines Blechformteils bekannt, bei welchem ein Blechmaterial in ein Blechvorformteil umgeformt wird, und bei welchem eine Blechformteilkante des Blechvorformteils durch ein lokales elektromagnetisches Nachumformen geformt wird. Die Vorformung und die Nachformung des Blechformteils werden hierbei in separaten und räumlich getrennten Umformwerkzeugen durchgeführt.

In der CN 107 138 591 A ist eine elektromagnetische Umformvorrichtung und ein Verfahren zur Herstellung eines zylindrischen Hohlkörpers beschrieben. Das Umformwerkzeug weist einen Umformstempel mit einer integrierten Umformspule zur Magnetumformung auf.

Der Erfindung liegt die Aufgabe zugrunde, ein besonders geeignetes Umformwerkzeug zur Tiefziehumformung einer Pouchfolie in eine Beutelhälfte anzugeben. Der Erfindung liegt weiterhin die Aufgabe zugrunde, ein besonders geeignetes Verfahren zur Herstellung eines Pouchbeutels anzugeben. Insbesondere soll hierbei ein möglichst großer Bauraum des Pouchbeutels realisiert werden. Der Erfindung liegt weiterhin die Aufgabe zugrunde, eine besonders geeignete Vorrichtung sowie eine besonders geeignete Pouchzelle anzugeben.

Hinsichtlich des Umformwerkzeugs wird die Aufgabe mit den Merkmalen des Anspruchs 1 und hinsichtlich des Verfahrens mit den Merkmalen des Anspruchs 4 sowie hinsichtlich der Vorrichtung mit den Merkmalen des Anspruchs 8 erfindungsgemäß gelöst. Vorteilhafte Ausgestaltungen und Weiterbildungen sind Gegenstand der Unteransprüche.

Das erfindungsgemäße Umformwerkzeug ist zur Tiefziehumformung einer Pouchfolie in eine Beutelhälfte eines Pouchbeutels vorgesehen, sowie dafür geeignet und eingerichtet. Das Umformwerkzeug weist hierbei eine Matrize oder Kavität als Negativform der Beutelhälfte, und einen Umform- oder Prägestempel zum Umformen oder Tiefziehen der Pouchfolie in die Matrize auf. Der bewegbare Umformstempel (Tiefziehstempel) ist somit dazu vorgesehen und eingerichtet die Pouchfolie durch eine Presskraft in die Matrize zu drücken oder zu pressen um diese zu verformen oder umzuformen.

Erfindungsgemäß ist eine Spulenanordnung zur Magnetumformung (elektromagnetisches Umformen), insbesondere zum Umformen mittels elektromagnetischer Pulstechnologie (EMPT), also zum elektromagnetischen Pulsumformen (EMPU), in den Umformstempel integriert. Die Spulenanordnung ist hierbei in einem Kopf- oder Prägebereich des Umformstempels integriert. Integriert bedeutet hierbei, dass die Spulenanordnung innerhalb des Umformstempels angeordnet ist, also dass die Spulenanordnung von dem Umformstempel umgeben oder eingefasst ist.

Erfindungsgemäß ist somit eine herkömmliche Tiefziehpresse zur Herstellung der Beutelhälfte um die Funktion des Magnetumformens erweitert. Dadurch ist es möglich, mit einem einzigen Umformwerkzeug die Pouchfolie sowohl mit einem Formwerkzeug als auch mit einer Wirkenergie tiefzuziehen.

Dadurch ist ein besonders geeignetes Umformwerkzeug realisiert. Insbesondere ist somit ein kombiniertes Tiefziehen der Pouchfolie mittels Formwerkzeug und mittels Wirkenergie ermöglicht. Vorzugsweise wird die Pouchfolie als Werkstück hierbei zunächst mittels des Umformstempels und der Matrize vorgeformt und anschließend mittels der Spulenanordnung durch Magnetumformung in die Beutelhälfte endgeformt. Mit anderen Worten ist es möglich eine Vorformung der Pouchfolie mit Hilfe des Umformstempels und ein Endformen mit EMPT in einem (einzigen) Umformwerkzeug durchzuführen. Dadurch sind besonders große Tiefziehtiefen bei Pouchfolien realisierbar.

Unter einem "Vorformen" oder "vorgeformt" ist hier und im Folgenden insbesondere zu verstehen, dass das Werkstück beziehungsweise die Pouchfolie in eine Gestalt (Form, Grundform) umgeformt wird, welche als Zwischenprodukt (Vorformteil) anschließend weiter verändert oder umgeformt wird. Das Zwischenprodukt ist hierbei eine vorgeformte Beutelhälfte. Unter einem "Endformen" oder "endgeformt" ist hier und im Folgenden insbesondere die weitere Veränderung des Zwischenprodukts in das Endprodukt, also das Umformen der vorgeformten Beutelhälfte in die fertige Beutelhälfte, zu verstehen.

Unter einem "Stoffschluss" oder einer "stoffschlüssigen Verbindung" zwischen wenigstens zwei miteinander verbundenen Teilen wird hier und im Folgenden insbesondere verstanden, dass die miteinander verbundenen Teile an Ihren Kontaktflächen durch stoffliche Vereinigung oder Vernetzung (beispielsweise aufgrund von atomaren oder molekularen Bindungskräften) gegebenenfalls unter Wirkung eines Zusatzstoffs zusammengehalten werden.

In einer vorteilhaften Ausführung weist die Matrize rechtwinkelige Eckbereiche auf. Dies bedeutet, dass die Eckbereiche der Matrize oder Kavität einen (Eck-)Winkel von 90° aufweisen. Die Eckbereiche der Matrize weisen somit kleine Radien auf, so dass eine Beutelhälfte mit einem besonders großen Bauraum zur Aufnahme eines Zellenstapels ermöglicht ist. Mit anderen Worten ermöglichen die rechteckigen Eckbereiche der Matrize schärfere oder kleinere Radien der fertigen Beutelhälfte, wodurch in der Folge ein größerer Bauraum im Pouchbeutel und somit eine höhere Zellkapazität einer damit ausgestatteten Pouchzelle realisierbar sind.

Der Umformstempel weist hierbei vorzugsweise einen vergleichsweise große Radien an seinem Kopfbereich auf, wodurch eine Rissbildung im Zuge des Tiefziehprozesses mittels Formwerkzeug vermieden wird. Dies bedeutet, dass die Radien des Kopfbereichs größer ausgeführt sind als die Radien der Matrize. Durch den Umformstempel wird die Pouchfolie somit zwar während der Vorformung in die Matrize eingepresst, jedoch nicht deren Eckbereiche: Die Umformung der Pouchfolie in die Eckbereiche erfolgt vorzugsweise beim anschließenden Endformen durch die Magnetumformung.

Zur Vermeidung oder Reduzierung einer Faltenbildung im Flanschbereich der Beutelhälfte weist das Umformwerkzeug erfindungsgemäß einen Niederhalter zur Fixierung der Pouchfolie auf, welcher die Pouchfolie an einem Rand der Matrize klemmend fixiert, wenn das Umformwerkzeug geschlossen wird beziehungsweise wenn der Umformstempel in die Matrize gepresst wird.

In einer bevorzugten Ausgestaltung ist in dem Niederhalter ein Trennmesser zur Vereinzelung oder Abtrennung der Pouchfolie integriert. Dadurch ist die Pouchfolie auf ein gewünschtes Endmaß zuschneidbar oder abtrennbar. Insbesondere ist somit ein Zuschneiden der Pouchfolie während oder im Zuge des Tiefziehprozesses ermöglicht.

Die im Hinblick auf das Umformwerkzeug angeführten Vorteile und Ausgestaltungen sind sinngemäß auch auf das Verfahren übertragbar und umgekehrt. Sofern nachfolgend Verfahrensschritte beschrieben werden, ergeben sich vorteilhafte Ausgestaltungen für die Vorrichtung beziehungsweise für das Umformwerkzeug insbesondere dadurch, dass diese dazu vorgesehen und ausgebildet sind, einen oder mehrere dieser Verfahrensschritte auszuführen.

Das erfindungsgemäße Verfahren ist zur Herstellung eines Pouchbeutels einer Pouchzelle vorgesehen sowie dafür geeignet und ausgestaltet. Hierzu ist ein vorstehend beschriebenes Umformwerkzeug vorgesehen, wobei eine Pouchfolie in einem Tiefziehprozess mittels des Umformstempels in eine vorgeformte Beutelhälfte (Zwischenprodukt, Vorformteil) überführt und die vorgeformte Beutelhälfte in einem anschließenden Magnetumformprozess mittels der Spulenanordnung in eine Beutelhälfte endgeformt wird. Unter einem Tiefziehprozess ist hierbei insbesondere ein Tiefziehen mit einem Formwerkzeug (Umformstempel) zu verstehen, wobei der Magnetumformprozess ein Tiefziehen mit Wirkenergie ist. Beispielsweise werden zur Herstellung des Pouchbeutels hierbei zwei derartig hergestellte Beutelhälften umlaufend stoffschlüssig zu dem Pouchbeutel gefügt. Der Stoffschluss wird hierbei beispielsweise mittels eines Heißsiegelprozesses bewirkt.

Verfahrensgemäß wird somit ein gewöhnlicher Tiefziehprozess als Vorformschritt verwendet, und um einen Magnetumformprozess als Endformschritt ergänzt, welcher die die vorgeformte Pouchfolie oder Beutelhälfte insbesondere in den Eck- und Kantenbereichen der Matrize zusätzlich in die gewünschte Endform umformt.

Zur Magnetumformung beziehungsweise EMPU ist die Spulenanordnung geeigneterweise mit einem Pulsgenerator gekoppelt oder koppelbar, mittels welchem elektrische Strompulse in die Spulenanordnung eingespeist werden. Durch die gepulste Bestromung erzeugt die Spulenanordnung gepulste Magnetfelder. Die Pouchfolie ist hierbei als eine Aluminium-Verbundfolie oder als eine Aluminium-Laminatfolie ausgeführt, in welcher durch die gepulsten Magnetfelder wiederum ein Strom induziert wird. Ein kurzer und hoher Stromimpuls durch die Spulenanordnung bewirkt somit eine Lorentzkraft zwischen dem Magnetfeld der Spulenanordnung und dem induzierten Strom der vorgeformten Pouchfolie beziehungsweise Beutelhälfte, welche das Vorformteil oder Zwischenprodukt berührungslos in die Beutelhälfte umformt. Dies bedeutet, dass die Pouchfolie zunächst berührend mittels des Umformstempels in die vorgeformte Beutelhälfte und anschließend berührungslos mittels der Spulenanordnung in die Beutelhälfte endgeformt wird.

Beim Vorformen mittels des Umformstempels werden große Radien des Umformstempels in den Eckbereichen der Kavität verwendet, um zunächst ohne große Ausdünnung der Pouchfolie diese in den Eckbereichen tiefzuziehen. Im Anschluss beziehungsweise mit einer kurzen zeitlichen Verzögerung, erfolgt das Endformen in den Eckbereichen auf eine finale scharfe Geometrie mittels EMPU. Dadurch ist es möglich die Pouchfolie beziehungsweise die vorgeformte Beutelhälfte in einer Kavität oder Matrize mit einer 90°-Schräge oder einem rechtwinkeligen Eckbereich umzuformen.

Für das Verfahren ist die Integration der Spulenanordnung in den Umformstempel besonders vorteilhaft, da somit die Spulenanordnung nach dem Vorformen bereits in der Nähe der vorgeformten Beutelhälfte positioniert ist. Dadurch wird das Material (Pouchfolie) beim Endformen in die finale Form gedrückt und nicht gezogen.

Durch das erfindungsgemäße Verfahren ist eine verbesserte Tiefziehfähigkeit bei Pouchfolien, also größere Tiefziehtiefen, realisierbar. Insbesondere werden hierbei Faltenbildungen der Beutelhälfte reduziert und Rückfederungseffekte minimiert, wodurch die Qualität der Beutelhälften und somit des Pouchbeutels verbessert werden. Durch das zweistufige Umform- oder Tiefziehverfahren wird die Betriebssicherheit und Dichtigkeit des Pouchbeutels verbessert, da eine gleichmäßigere Material- oder Schichtdickenaufteilung der Pouchfolie in den beanspruchten oder kritischen (Eck-)Bereichen realisiert ist. Insbesondere kann mit dem Verfahren auf ein Vor- oder Nacherwärmen zur Reduzierung von Eigenspannungen der geformten Beutelhälfte verzichtet werden, da solche Eigenspannungen durch das Magnetumformen oder EMPU reduziert oder vollständig verhindert werden.

In einer vorteilhaften Ausgestaltung schließt sich die Endformung durch den Magnetumformprozess im Wesentlichen unterbrechungsfrei an die Vorformung durch den Umformstempel an. Dies bedeutet, dass die Umformprozesse direkt aufeinanderfolgend ausgeführt werden, insbesondere, dass die Umformprozesse ohne zwischenzeitige Öffnung des Umformwerkzeugs ausgeführt werden. Die Magnetumformung erfolgt somit während das Vorformteil zwischen dem Umformstempel und der Matrize gehalten ist, so dass das Vorformteil von dem Umformstempel weg in die Eckbereiche der Matrize gedrückt wird. Dadurch ist eine besonders aufwandsreduzierte und vereinfachte Herstellung der Beutelhälften beziehungsweise des Pouchbeutels gewährleistet.

Ein erfindungsgemäßer Aspekt des Verfahrens sieht vor, dass der Umformstempel einem Niederhalter des Umformwerkzeugs emporsteht, wenn die Pouchfolie dem Umformwerkzeugzugeführt wird, so dass die Pouchfolie zumindest abschnittsweise gewölbt wird, bevor die Pouchfolie vorgeformt wird. Mit anderen Worten wird der Umformstempel zu Beginn in eine Stellung verfahren, in welcher er dem Niederhalter zumindest teilweise empor- oder übersteht. Dadurch weist der Umformstempel ein höheres Niveau als der Nieder- oder Gegenhalter auf. Der Stempel bewegt sich nicht während die Pouchfolie zugeführt wird, wodurch die Pouchfolie während der Positionierung im Umformwerkzeug bereits etwas vorgeformt wird, was für die nachfolgende Umformung hilfreich ist.

Das Zuführen oder Positionieren der Pouchfolie erfolgt gemäß einer denkbaren Ausbildung durch ein Abwickeln der Pouchfolie von einer Folienrolle. Die Pouchfolie wird hierbei automatisch entlang einer Zuführrichtung von der Folienrolle zum Umformwerkzeug geführt. Die Pouchfolie wird hierbei zwischen der Matrize und dem Umformstempel angeordnet, und wird in dem Umformwerkzeug fixiert und vereinzelt. In einer zweckmäßigen Ausführung des Verfahrens wird der Umformstempel im Zuge des Tiefziehprozesses in eine Totpunktstellung überführt oder bewegt, wobei die Pouchfolie insbesondere vereinzelt wird, wenn der Umformstempel die Totpunktstellung erreicht.

Die Pouchfolie ist somit vorzugsweise nicht in Form von einzelnen Folienblättern, sondern als ein Endlosmaterial, also als eine scheinbar oder quasi endlose Folienbahn ausgeführt. Unter einem Endlosmaterial ist hierbei insbesondere eine Materialbahn zu verstehen, deren Breiten- und Höhenabmessungen wesentlich geringer dimensioniert sind als dessen Längenabmessung. Die Pochfolie wird also am Stück als Folienbahn, quasi endlos, von der Folienrolle abgewickelt und bleibt ununterbrochen bis sie dem Umformwerkzeug zugeführt wird. Unter "Vereinzelung" oder "vereinzeln" ist hierbei insbesondere eine Abtrennung oder Abschneiden oder Konfektionieren eines Folienblatts von dem Endlosmaterial zu verstehen. Dies bedeutet, dass die Vereinzelung oder der Konfektionierschnitt im Umformwerkzeug erfolgt. Mit anderen Worten ist eine Funktionsintegration der Vereinzelung und des Umformens realisiert, wodurch eine Prozessschrittanzahl bei der Herstellung des Pouchbeutels vorteilhaft reduziert ist.

Die im Hinblick auf das Umformwerkzeug und/oder das Verfahren angeführten Vorteile und Ausgestaltungen sind sinngemäß auch auf die nachfolgend beschriebene Vorrichtung übertragbar und umgekehrt.

Die erfindungsgemäße Vorrichtung ist zur Herstellung eines Pouchbeutels einer Pouchzelle vorgesehen, sowie dafür geeignet und eingerichtet. Die Vorrichtung weist hierbei ein vorstehend beschriebenes Umformwerkzeug für ein zweistufiges Tiefziehen einer Pouchfolie in eine Beutelhälfte auf. Die Vorrichtung weist weiterhin eine Folienrolle zur Versorgung des Umformwerkzeugs mit einer Pouchfolie auf. Das Umformwerkzeug und/oder die Folienrolle sind hierbei mit einem Controller (das heißt einer Steuereinheit) gekoppelt. Dadurch ist eine besonders geeignete Vorrichtung zur Herstellung eines Pouchbeutels realisiert.

Vorzugsweise weist die Vorrichtung hierbei eine dem Umformwerkzeug nachgeschaltete Fügeeinrichtung auf, welche zwei Beutelhälften zu einem Pouchbeutel fügt. Die Fügeeinrichtung ist beispielsweise als eine Heißsiegeleinrichtung ausgeführt, welche eine randseitig umlaufende stoffschlüssige Fügeverbindung zwischen den Beutelhälften realisiert.

Der Controller ist hierbei allgemein - programm- und/oder schaltungstechnisch - zur Durchführung des vorstehend beschriebenen erfindungsgemäßen Verfahrens eingerichtet. Der Controller ist somit konkret dazu eingerichtet, eine Pouchfolie von der Folienrolle abzuwickeln und dem Umformwerkzeug zuzuführen sowie den Vor- und Endformschritt des Umformwerkzeugs zu steuern.

In einer bevorzugten Ausgestaltungsform ist der Controller zumindest im Kern durch einen Mikrocontroller mit einem Prozessor und einem Datenspeicher gebildet, in dem die Funktionalität zur Durchführung des erfindungsgemäßen Verfahrens in Form einer Betriebssoftware (Firmware) programmtechnisch implementiert ist, so dass das Verfahren - gegebenenfalls in Interaktion mit einem Vorrichtungsnutzer - bei Ausführung der Betriebssoftware in dem Mikrocontroller automatisch durchgeführt wird. Der Controller kann im Rahmen der Erfindung alternativ aber auch durch ein nicht-programmierbares elektronisches Bauteil, wie zum Beispiel einem anwendungsspezifischen integrierten Schaltkreis (ASIC), gebildet sein, in dem die Funktionalität zur Durchführung des erfindungsgemäßen Verfahrens mit schaltungstechnischen Mitteln implementiert ist.

Nachfolgend sind Ausführungsbeispiele der Erfindung anhand einer Zeichnung näher erläutert. In den Figuren ist in vereinfachten und schematischen Darstellungen ein Verfahren zur Herstellung eines Pouchbeutels, mit einer Vorrichtung aufweisend eine Folienrolle und ein Umformwerkzeug, dargestellt. Darin zeigen:
- Fig. 1: ein Zuführen und Positionieren der Pouchfolie in dem Umformwerkzeug,
- Fig. 2: eine klemmende Fixierung der Pouchfolie in dem Umformwerkzeug,
- Fig. 3: eine Vereinzelung und Vorformung der Pouchfolie,
- Fig. 4: eine Endformung der Pouchfolie, und
- Fig. 5: eine Entnahme einer Beutelhälfte.

Nachfolgend sind einander entsprechende Teile und Größen stets mit den gleichen Bezugszeichen versehen.

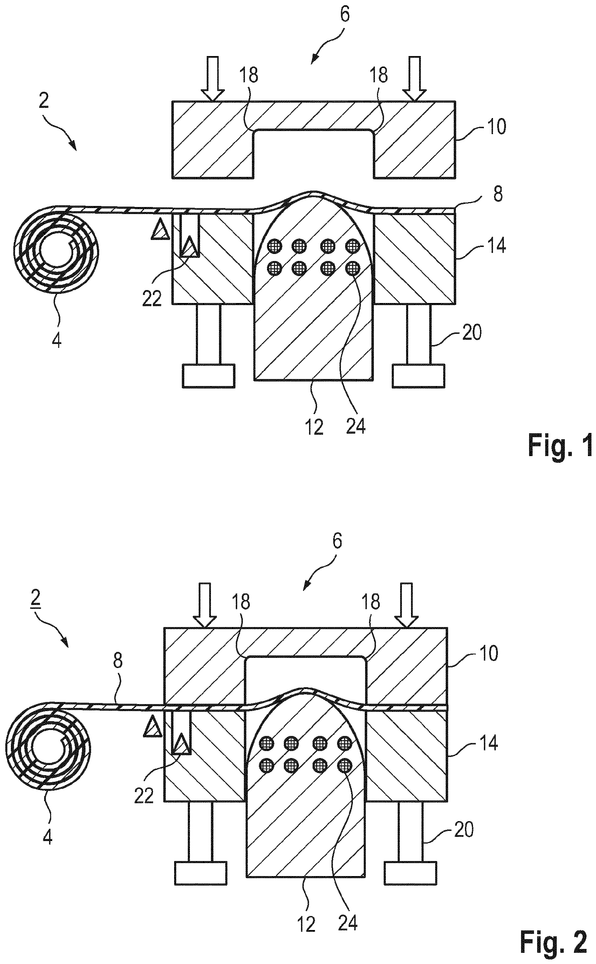

Die in den Figuren 1 bis 6 dargestellte Vorrichtung 2 weist eine Folienrolle 4 sowie ein Umformwerkzeug 6 und einen nicht näher dargestellten Controller zur Steuerung der Folienrolle 4 und des Umformwerkzeugs 6 auf. Die Vorrichtung 2 ist zur Herstellung eines Pouchbeutels einer Pouchzelle vorgesehen, sowie dafür geeignet und eingerichtet. Auf der Folienrolle 4 ist eine Pouchfolie 8 als Endlosmaterial aufgewickelt. Die Pouchfolie 8 ist hierbei als eine Aluminium-Verbundfolie oder als eine Aluminium-Laminatfolie ausgeführt.

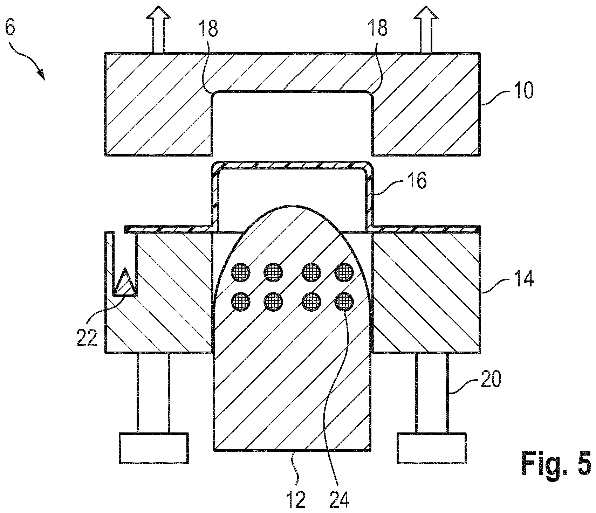

Das Umformwerkzeug 6 weist eine Matrize oder Kavität 10 und einen bewegbaren Umformstempel 12 sowie einen Nieder- oder Gegenhalter 14 auf. Die Matrize 10 ist als eine Negativform für eine Beutelhälfte 16 (Fig. 5) eines nicht näher gezeigten Pouchbeutels ausgeführt. Die Matrize 10 weist hierbei im Wesentlichen rechtwinklige Eckbereiche 18 auf. Der Niederhalter 14 ist mit Gasdruckfedern 20 gekoppelt, und weist ein integriertes Schneid- oder Trennmesser 22 auf.

Der Umformstempel 12 weist einen Stempelkopf auf, welcher an die Negativform der Matrize 10 angepasst ist, jedoch hierbei einen größeren Radius als die Eckbereiche 18 aufweist. In den Stempelkopf ist eine Spulenanordnung 24 integriert. Die Spulenanordnung 24 ist hierbei insbesondere eine EMPT- oder EMPU-Spulenanordnung. Die Spulenanordnung 24 ist beispielsweise mit einem nicht näher gezeigten Pulsgenerator gekoppelt, welcher beispielsweise von dem Controller gesteuert ist.

Das Umformwerkzeug 6 ist zwischen einer Offenstellung (Fig. 1) und einer Schließstellung (Fig. 2) verstellbar. In der Offenstellung ist die Matrize 10 beabstandet von dem Niederhalter 14, so dass die Pouchfolie 8 zwischen der Matrize 10 und dem Niederhalter 14 angeordnet werden kann. In der Schließstellung wird die Matrize 10 auf den Niederhalter 14 gepresst, so dass die Pouchfolie 8 in einem Flanschbereich zwischen den Werkzeugteilen 10, 14 eingeklemmt und fixiert wird.

In dem in Fig. 1 dargestellten Verfahrensschritt wird die Pouchfolie 8 von der Folienrolle 4 abgewickelt und entlang einer nicht näher bezeichneten Zuführrichtung automatisch dem Umformwerkzeug 6 zugeführt. Der Umformstempel 12 ist hierbei in eine untere Stempelstellung verfahren, wobei der Stempelkopf dem Niederhalter 14 zumindest abschnittsweise emporsteht.

Dadurch weist die Pouchfolie 8 beim Einsetzen in das Umformwerkzeug 6 bereits eine gewisse (Vor-)Wölbung auf.

Die Fig. 2 zeigt einen darauffolgenden Verfahrensschritt, in welchem das Umformwerkzeug 6 geschlossen, also in die Schließstellung bewegt, wird. Dadurch wird die Pouchfolie 8 klemmend von dem Niederhalter 14 und der Matrize 10 fixiert.

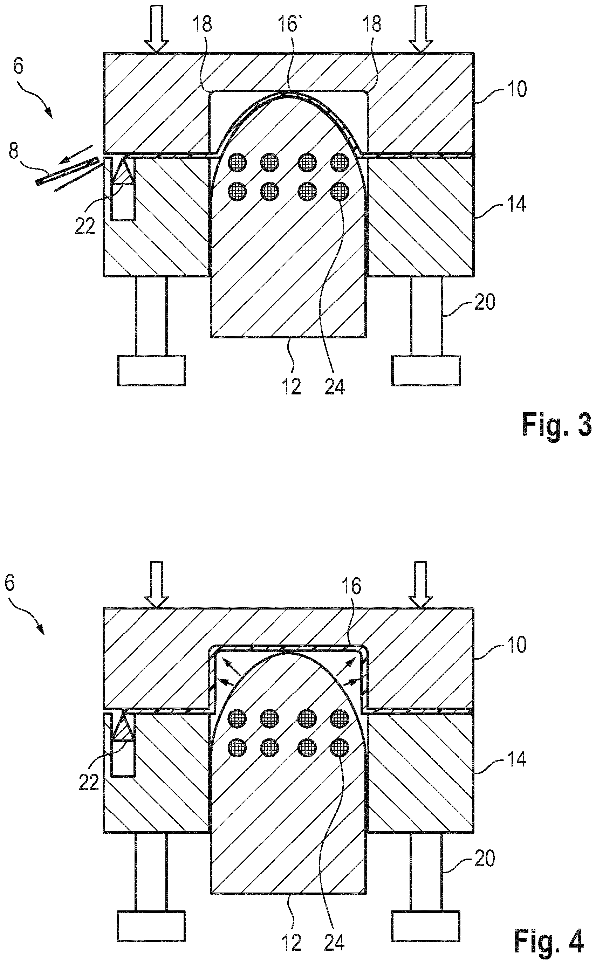

In dem anschließenden Verfahrensschritt der Fig. 3 erfolgt eine Vorformung der Pouchfolie 8 zu einer vorgeformten Beutelhälfte 16' durch eine Bewegung des Umformstempels 12 in Richtung der Matrize 10. Die Fig. 3 zeigt hierbei eine obere Totpunktstellung des Umformstempels 12, in welcher die Pouchfolie 8 bzw. die vorgeformte Beutelhälfte 16' zumindest abschnittsweise an der Matrize 10 anliegt. Beim Erreichen der Totpunktstellung erfolgt vorzugsweise gleichzeitig ein Trennschnitt auf das Zielmaß der Beutelhälfte 16. Hierzu wird die vorgeformte Beutelhälfte 16' von der Materialbahn der Pouchfolie 8 mit dem Trennmesser 22 vereinzelt. Die Beutelhälfte 16' ist ein Vorformteil, welches insbesondere in den Eckbereichen 18 noch nicht vollständig an die Negativform der Matrize 10 umgeformt ist.

In der Totpunktstellung des Umformstempels 12 wird die Spulenanordnung 24 aktiviert und die Beutelhälfte 16` in die Eckbereiche 18 der Matrize 10 gedrückt, und somit mittels Magnetumformens in dem in Fig. 4 gezeigten Verfahrensschritt zu der Beutelhälfte 16 endgeformt. Die Endformung durch den Magnetumformprozess schließt sich hierbei im Wesentlichen unterbrechungsfrei an die Vorformung durch den Umformstempel 12 an, ohne dass das Umformwerkzeug 6 geöffnet werden muss.

Abschließend wird das Umformwerkzeug 6 in dem in Fig. 5 gezeigten Verfahrensschritt geöffnet, und die umgeformte Pouchfolie beziehungsweise die Beutelhälfte 16 abgeführt. Die Beutelhälfte 16 wird beispielsweise an eine dem Umformwerkzeug 6 nachgeschaltete Fügeeinrichtung geführt, welche zwei Beutelhälften 16 zu einem Pouchbeutel fügt.

### Bezugszeichenliste

- 2: Vorrichtung
- 4: Folienrolle
- 6: Umformwerkzeug
- 8: Pouchfolie
- 10: Matrize
- 12: Umformstempel
- 14: Niederhalter
- 16, 16`: Beutelhälfte
- 18: Eckbereich
- 20: Gasdruckfeder
- 22: Trennmesser
- 24: Spulenanordnung

## Patentansprüche

1. Umformwerkzeug (6) zur Tiefziehumformung einer Pouchfolie (8) in eine Beutelhälfte (16) eines Pouchbeutels, wobei das Umformwerkzeug (6) zwischen einer Offenstellung und einer Schließstellung verstellbar ist, aufweisend
- eine Matrize (10) als Negativform der Beutelhälfte (16),
- einen Umformstempel (12) zum Umformen der Pouchfolie (8) in die Matrize (10), und
- einen Niederhalter (14) zur Fixierung der Pouchfolie (8), welcher die Pouchfolie (8) klemmend fixiert, wenn das Umformwerkzeug (6) geschlossen wird,
- wobei in den Umformstempel (12) eine Spulenanordnung (24) zur Magnetumformung der Pouchfolie (8) integriert ist,
- wobei der Umformstempel (12) zwischen einer unteren Stempelstellung, in welcher der Umformstempel (12) nicht in die Matrize (10) eingreift, und einer oberen Totpunktstellung, in welcher der Umformstempel (12) in die Matrize (10) eingreift, verfahrbar ist, **dadurch gekennzeichnet,**
**dass** der Umformstempel (12) in der unteren Stempelstellung dem Niederhalter (14) zumindest abschnittsweise emporsteht.

2. Umformwerkzeug (6) nach Anspruch 1,
**dadurch gekennzeichnet,**
**dass** die Matrize (10) rechtwinkelige Eckbereiche (18) aufweist.

3. Umformwerkzeug (6) nach Anspruch 1 oder 2,
**dadurch gekennzeichnet,**
**dass** in den Niederhalter (14) ein Trennmesser (22) zur Vereinzelung der Pouchfolie (8) integriert ist.

4. Verfahren zur Herstellung eines Pouchbeutels (16) einer Pouchzelle, mit einem Umformwerkzeug (6) nach einem der Ansprüche 1 bis 3, wobei eine Pouchfolie (8) in einem Tiefziehprozess mittels des Umformstempels (12) in eine vorgeformte Beutelhälfte (16`) überführt und die vorgeformte Beutelhälfte (16') in einem anschließenden Magnetumformprozess mittels der Spulenanordnung (24) in eine Beutelhälfte (16) endgeformt wird,
**dadurch gekennzeichnet**
**dass** der Umformstempel (12) einem Niederhalter (14) des Umformwerkzeugs (6) emporsteht, wenn die Pouchfolie (8) dem Umformwerkezug (6) zugeführt wird, so dass die Pouchfolie (8) zumindest abschnittsweise gewölbt wird, bevor die Pouchfolie (8) vorgeformt wird.

5. Verfahren nach Anspruch 4,
**dadurch gekennzeichnet,**
**dass** die Endformung durch den Magnetumformprozess im Wesentlichen unterbrechungsfrei an die Vorformung durch den Umformstempel (12) anschließt.

6. Verfahren nach Anspruch 4 oder 5,
**dadurch gekennzeichnet,**
**dass** die Pouchfolie (8) von einer Folienrolle (4) abgewickelt und dem Umformwerkzeug (6) zugeführt wird, so dass die Pouchfolie (8) zwischen der Matrize (10) und dem Umformstempel (12) angeordnet ist, wobei die Pouchfolie (8) in dem Umformwerkzeug (6) fixiert und vereinzelt wird.

7. Verfahren nach Anspruch 6,
**dadurch gekennzeichnet,**
**dass** der Umformstempel (12) im Zuge des Tiefziehprozesses in eine Totpunktstellung überführt wird, wobei die Pouchfolie (8) vereinzelt wird, wenn der Umformstempel (12) die Totpunktstellung erreicht.

8. Vorrichtung zur Herstellung eines Pouchbeutels (16) einer Pouchzelle, aufweisend
- ein Umformwerkzeug (6) nach einem der Ansprüche 1 bis 3,
- eine Folienrolle (4) zur Versorgung des Umformwerkzeugs (6) mit einer Pouchfolie (8), und
- einen Controller zur Durchführung eines Verfahrens nach einem der Ansprüche 4 bis 7.

## Claims

1. Forming tool (6) for thermoforming a pouch film (8) into a bag half (16) of a pouch bag, the forming tool (6) being adjustable between an open position and a closed position, comprising
- a die (10) as a negative mold of the bag half (16),
- a shaping punch (12) for shaping the pouch film (8) into the die (10), and
- a blank holder (14) for securing the pouch film (8), which blank holder secures the pouch film (8) by clamping when the forming tool (6) is closed,
- a coil arrangement (24) for magnetically forming the pouch film (8) being integrated into the shaping punch (12),
- the shaping punch (12) being movable between a lower punch position, in which the shaping punch (12) does not engage in the die (10), and an upper dead center position, in which the shaping punch (12) engages in the die (10),
**characterized in that**
the shaping punch (12) in the lower punch position projects beyond the blank holder (14) at least in portions.

2. Forming tool (6) according to claim 1,
**characterized in that**
the die (10) has right-angled corner regions (18).

3. Forming tool (6) according to either claim 1 or claim 2,
**characterized in that**
a separating knife (22) for separating the pouch film (8) is integrated into the blank holder (14).

4. Method for producing a pouch bag (16) of a pouch cell, using a forming tool (6) according to any of claims 1 to 3, a pouch film (8) being converted into a preformed bag half (16') in a thermoforming process by means of the shaping punch (12) and the preformed bag half (16') being finally formed into a bag half (16) in a subsequent magnetic forming process by means of the coil arrangement (24),
**characterized in that**
the shaping punch (12) projects beyond a blank holder (14) of the forming tool (6) when the pouch film (8) is fed to the forming tool (6), so that the pouch film (8) is curved at least in portions before the pouch film (8) is preformed.

5. Method according to claim 4,
**characterized in that**
the final forming by the magnetic forming process follows the preforming by the shaping punch (12) substantially without interruption.

6. Method according to either claim 4 or claim 5,
**characterized in that**
the pouch film (8) is unwound from a film roll (4) and fed to the forming tool (6) so that the pouch film (8) is arranged between the die (10) and the shaping punch (12), the pouch film (8) being secured to and separated in the forming tool (6).

7. Method according to claim 6,
**characterized in that**
the shaping punch (12) is moved into a dead center position during the thermoforming process, the pouch film (8) being separated when the shaping punch (12) reaches the dead center position.

8. Device for producing a pouch bag (16) of a pouch cell, comprising
- a forming tool (6) according to any of claims 1 to 3,
- a film roll (4) for supplying the forming tool (6) with a pouch film (8), and
- a controller for implementing a method according to any of claims 4 to 7.

## Revendications

1. Outil de formage (6) pour le formage par emboutissage profond d'une feuille de pochette (8) dans une moitié de sachet (16) d'un sachet de pochette, dans lequel l'outil de formage (6) peut être déplacé entre une position ouverte et une position fermée, présentant
- une matrice (10) servant de moule négatif de la moitié de sachet (16),
- un poinçon de formage (12) pour le formage de la feuille de pochette (8) dans la matrice (10), et
- un serre-flan (14) pour la fixation de la feuille de pochette (8), qui fixe la feuille de pochette (8) par serrage lorsque l'outil de formage (6) est fermé,
- dans lequel un agencement de bobines (24) est intégré dans le poinçon de formage (12) pour le formage magnétique de la feuille de pochette (8),
- dans lequel le poinçon de formage (12) est déplaçable entre une position de poinçon inférieure, dans laquelle le poinçon de formage (12) ne vient pas en prise dans la matrice (10), et une position de point mort supérieur, dans laquelle le poinçon de formage (12) vient en prise dans la matrice (10),
**caractérisé en ce**
**que** le poinçon de formage (12), dans la position de poinçon inférieure, dépasse au moins par sections du serre-flan (14).

2. Outil de formage (6) selon la revendication 1,
**caractérisé en ce**
**que** la matrice (10) présente des zones d'angle (18) à angle droit.

3. Outil de formage (6) selon la revendication 1 ou 2,
**caractérisé en ce**
**qu**'un couteau de séparation (22) est intégré dans le serre-flan (14) pour séparer la feuille de pochette (8).

4. Procédé pour la fabrication d'un sachet de pochette (16) d'une cellule de pochette, comportant un outil de formage (6) selon l'une des revendications 1 à 3, dans lequel une feuille de pochette (8) est transformée en une moitié de sachet préformée (16') dans un processus d'emboutissage profond à l'aide du poinçon de formage (12) et la moitié de sachet préformée (16') est formée définitivement en une moitié de sachet (16) dans un processus de formage magnétique ultérieur à l'aide de l'agencement de bobines (24),
**caractérisé en ce**
**que** le poinçon de formage (12) dépasse d'un serre-flan (14) de l'outil de formage (6) lorsque la feuille de pochette (8) est amenée à l'outil de formage (6), de sorte que la feuille de pochette (8) est bombée au moins par sections avant que la feuille de pochette (8) soit préformée.

5. Procédé selon la revendication 4,
**caractérisé en ce**
**que** le formage définitif par le processus de formage magnétique fait suite, essentiellement sans interruption, au préformage par le poinçon de formage (12).

6. Procédé selon la revendication 4 ou 5,
**caractérisé en ce**
**que** la feuille de pochette (8) est déroulée d'une bobine de feuille (4) et amenée à l'outil de formage (6), de sorte que la feuille de pochette (8) est disposée entre la matrice (10) et le poinçon de formage (12), dans lequel la feuille de pochette (8) est fixée et séparée dans l'outil de formage (6).

7. Procédé selon la revendication 6,
**caractérisé en ce**
**que** le poinçon de formage (12) est transféré dans une position de point mort au cours du processus d'emboutissage profond, dans lequel la feuille de pochette (8) est séparée lorsque le poinçon de formage (12) atteint la position de point mort.

8. Dispositif pour la fabrication d'un sachet de pochette (16) d'une cellule de pochette, présentant
- un outil de formage (6) selon l'une des revendications 1 à 3,
- un rouleau de film (4) pour l'alimentation de l'outil de formage (6) avec un film de pochette (8), et
- un dispositif de commande pour la réalisation d'un procédé selon l'une des revendications 4 à 7.
